# EUROPEAN PATENT APPLICATION

(11) **EP 1 864 751 A1**
(43) Date of publication of application: **12.12.2007**
(21) Application number: 07109749.7
(22) Date of filing: 06.06.2007
(51) Int. Cl.: B23Q 11/00, B24B 23/02, B25F 5/00

(54) **A locking device for the mandrel shaft of a motorised tool**

(30) Priority: 09.06.2006 IT MI20061115
(71) Applicant: Valentini, Guido, 20122 Milano (IT)
(72) Inventor: Valentini, Guido, 20122 Milano (IT)
(74) Representative: Mittler, Enrico

(57) **Abstract**

There is described a locking device for a mandrel shaft (2) of a motorised tool, comprising a rigid body (9) which is selectively mobile between a resting position stressed by elastic means (10) and a locking position of the mandrel shaft (2) wherein a locking portion (11) of said rigid body (9) couples with the end (12) of the mandrel shaft (2) so as to prevent the rotation thereof.

## Description

The present invention relates to a locking device for the mandrel shaft of a motorised tool.

To carry out the replacement of the worn operating tool in a motorised machine tool, for instance a grinding wheel in a grinding machine, the mandrel shaft which is connected to said tool by means of a gear transmission must be manually locked.

There are known locking devices for the mandrel shaft which directly act on the toothed wheel that transmits the rotatory motion of the mandrel shaft to other components until it reaches the operator tool.

Furthermore, there are known machine tools for the processing of surfaces comprising locking devices acting on a clutch member integral with the mandrel shaft.

The above-said machine tools sometimes include a spring with a preloading device having the function of a clutch to adjust the overload which occurs near said toothed wheel.

From an external button which may be manoeuvred by the operator, said button must be made to interact with at least one intermediate component to lock the mandrel shaft. This implies complex constructive solutions which are however liable to breaking.

A possible breaking of the locking device may also imply damage to internal mechanical members which are very fragile such as for instance the above mentioned spring with preloading device.

It is the object of the present invention to provide a locking device for the mandrel shaft which directly acts thereon without the above-mentioned problems, with a constructive solution which is simplified with respect to the existing devices.

According to the invention, such an object is achieved with a locking device for a mandrel shaft of a motorised tool, characterised in that it comprises a rigid body which is selectively mobile between a resting position stressed by elastic means and a locking position of the mandrel shaft, in which a locking portion of said rigid body couples with the end of the mandrel shaft so as to prevent the rotation thereof.

The locking operation occurs on the terminal portion of the mandrel shaft, i.e. in the part of the shaft which is easier to access from the outside.

A possible replacement of said rigid body is rather simple.

These and other features of the present invention will become more apparent from the following detailed description of two practical embodiments thereof shown by no way of limitation in the accompanying drawings, in which:
figure 1 shows a perspective view of a first embodiment of the invention;
figure 2 shows a section view along a plane containing the rotation axis of the mandrel shaft of the embodiment in figure 1, with the rigid body in a resting position;
figure 3 shows a section view similar to that in figure 2, with the rigid body in a locking position of the mandrel shaft;
figure 4 shows a section view along line IV-IV in figure 2;
figure 5 shows a section view along line V-V in figure 3;
figure 6 shows a perspective view of a second embodiment of the invention with the rigid body in a resting position;
figure 7 shows a perspective view similar to that in figure 6, with the rigid body in a locking position of the mandrel shaft;
figure 8 shows a top plan view of figure 6;
figure 9 shows a top plan view of figure 7;
figure 10 shows a section view along a plane orthogonal to the axis of the mandrel shaft, with the rigid body in a resting position;
figure 11 shows a section view similar to that of figure 10, with the rigid body in a locking position of the mandrel shaft.

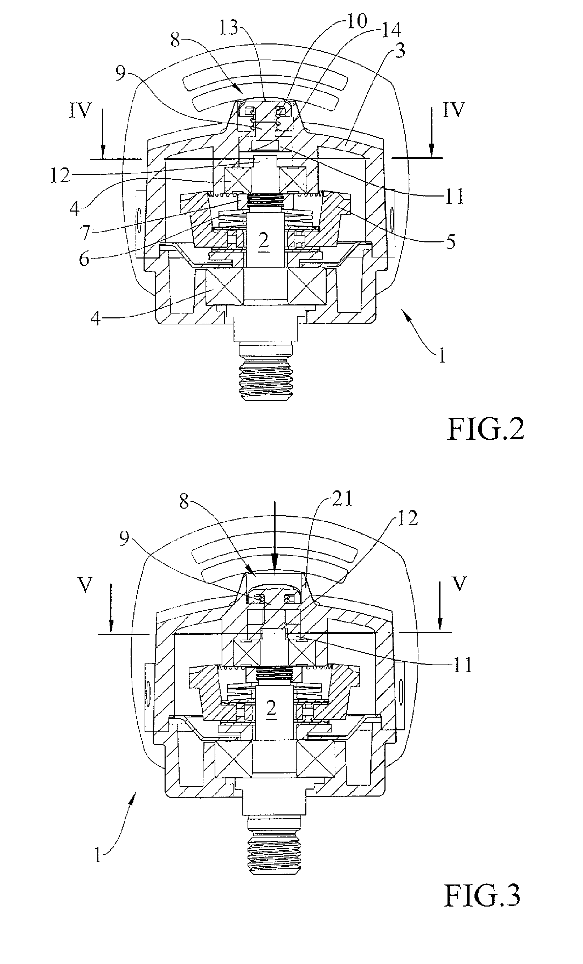

A gear box 1 for the movement of an operator tool, for instance, a grinding wheel of a grinding machine, comprises a mandrel shaft 2 supported by internal portions 3 of the box 1 by means of bearings 4 (figure 2).

A toothed wheel 5 is mounted on said mandrel 2, a spring 6 and a preloading device 7 of said spring 6 also being provided.

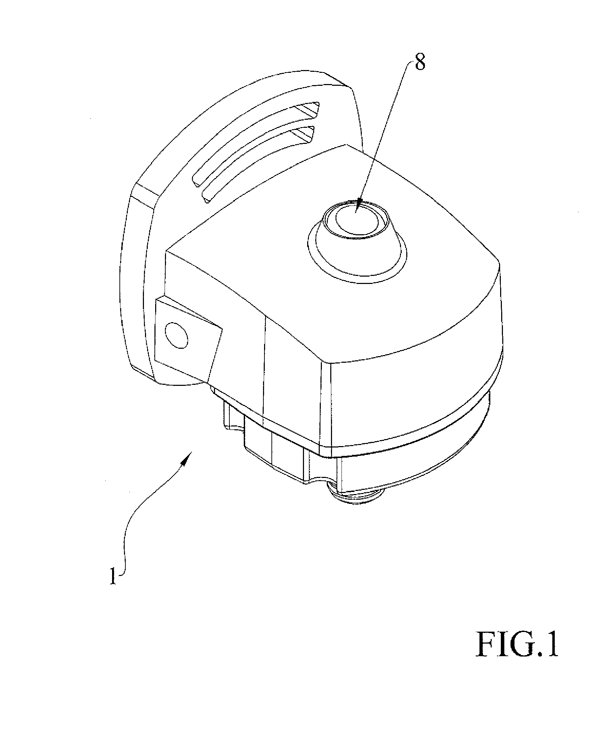

In the embodiment shown in figures 1-5, the box 1 comprises a front locking device 8 for the mandrel 2.

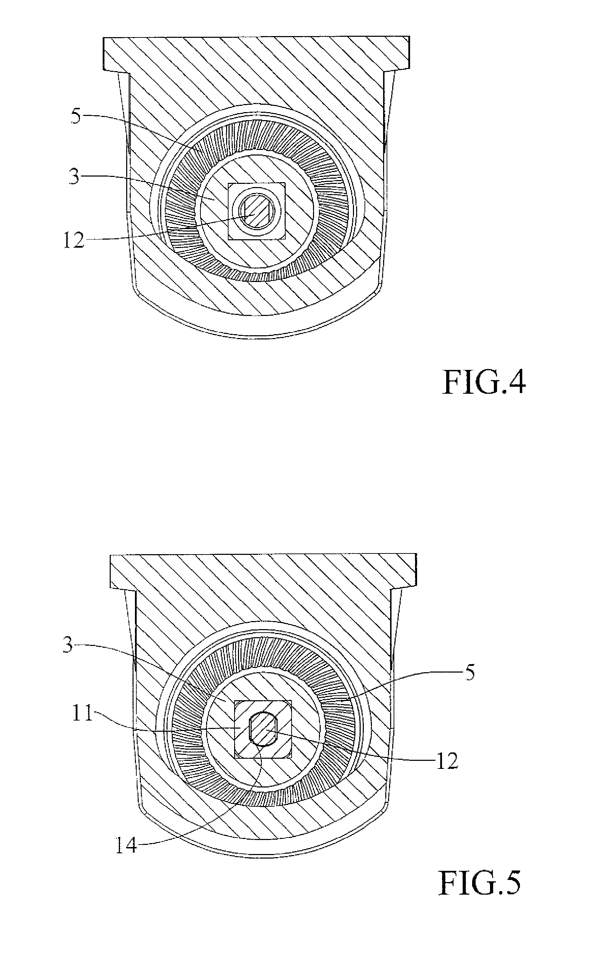

Said front device 8 comprises a rigid body 9 which is selectively mobile between a resting position (fig.2) stressed by a preloaded spring 10, and a locking position of the mandrel 2 (fig.3) in which a locking portion 11 couples with the end 12 of the mandrel 2 so as to prevent the rotation thereof (figure 5).

When the rigid body 9 is in a resting position, the mandrel 2 is free to rotate (figure 4).

The rigid body 9 is manually stressed in a locking position by means of a portion 13 which may be reached from the outside, in the direction of the axis of the mandrel 2, i.e. frontally with respect to the end 12 of the mandrel shaft 2.

The spring 10 tends to maintain the rigid body 9 in a resting position, and its recovery force must be overcome by the stressing force of the operator.

The locking portion 11 displays a bore 14 having a suitable shape which is complementary to the (substantially elliptical) end 12 of the mandrel 2 preventing the rotation thereof (figure 5).

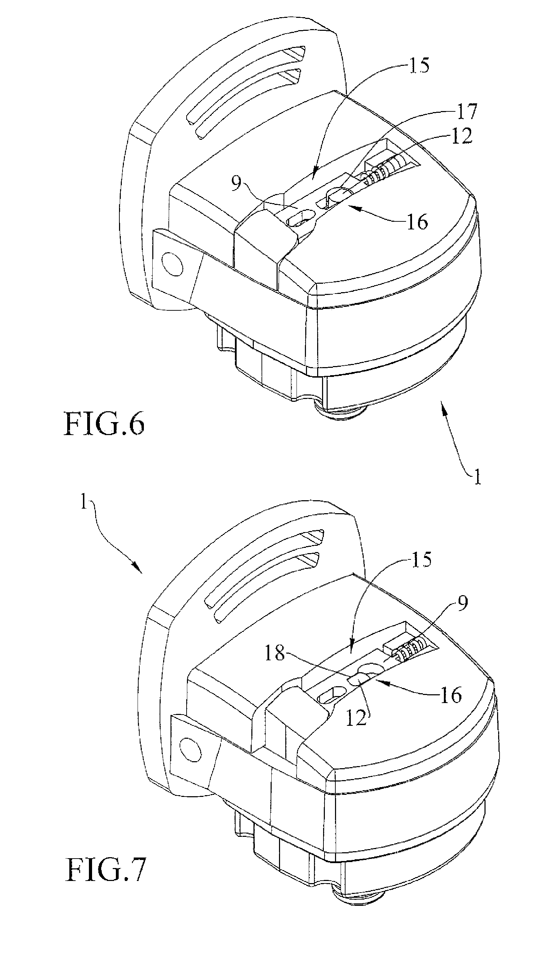

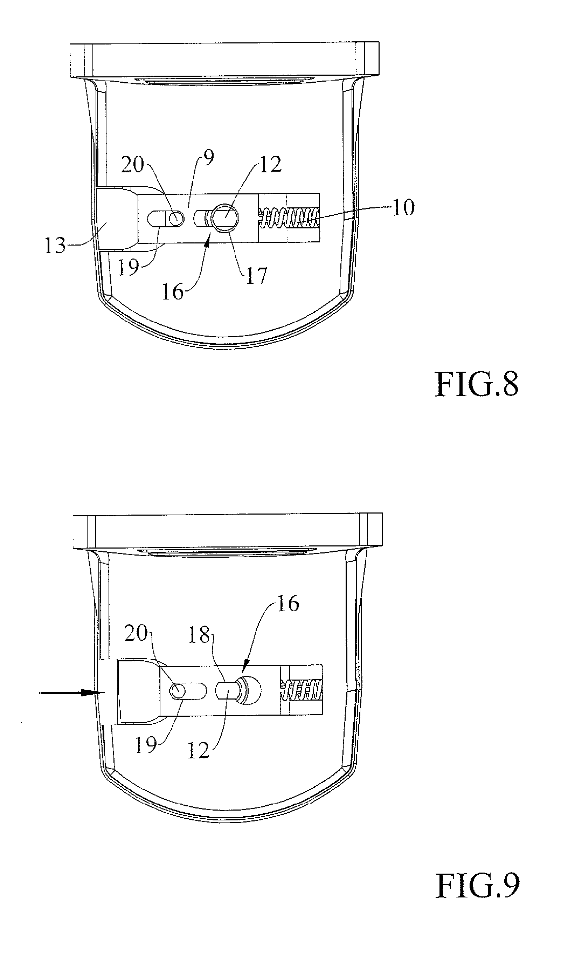

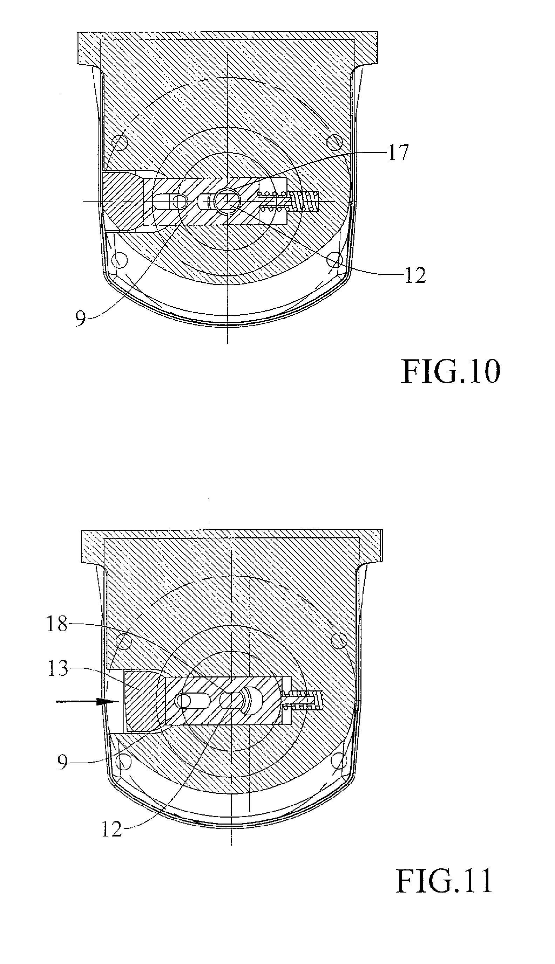

In the embodiment shown in figures 6-11, the box 1 displays a side locking device 15 for the mandrel 2.

The rigid body 9 shifts in a direction which is orthogonal with respect to the axis of the mandrel 2, and displays a bore 16 comprising a rotation portion 17 shaped so as to allow the rotation of the mandrel 2 (resting position, figures 6, 8, 10), and a locking portion 18 to prevent the rotation of said mandrel 2 (locking position, figures 7, 9, 11).

The resting position is stressed by the spring 10.

By acting on the portion 13, the rigid body 9 is shifted in the locking position thus allowing the coupling of the end 12 of the mandrel 2 with the locking portion 18 of the bore 16.

In this second embodiment, the rigid body 9 displays a second guide bore 19 in which a guide pin 20 integral with the gear box 1 is engaged.

In the first embodiment, the rigid body 9 is guided by guide portions 21 of the box 1.

The operator may easily block the mandrel 2 to carry out without any problem the replacement of the grinding wheel or any other operation which imposes the locking of the mandrel 2.

The locking devices 8 and 15 imply only a small constructive variation of the gear box 1, in no way interfering with the toothed wheel 5 or with the spring 6 or with the preloading device 7 of the spring 6 itself.

## Claims

1. A locking device for a mandrel shaft (2) of a motorised tool, **characterised in that** it comprises a rigid body (9) which is selectively mobile between a resting position stressed by elastic means (10) and a locking position of the mandrel shaft (2) wherein a locking portion (11) of said rigid body (9) couples with the end (12) of the mandrel shaft (2) so as to prevent the rotation thereof.

2. A device according to claim 1, **characterised in that** said locking portion (11) comprises a bore (14) which may be coupled with the end (12) of the mandrel shaft (2) so as to prevent the rotation thereof.

3. A device according to claim 1 or 2, **characterised in that** said rigid body (9) is selectively mobile in the direction of the rotation axis of the mandrel shaft (2).

4. A device according to claim 1 or 2, **characterised in that** said rigid body (9) is selectively mobile in the direction orthogonal with respect to the rotation axis of the mandrel shaft (2).

5. A device according to claim 4, **characterised in that** said rigid body (9) comprises a bore (16) having a portion (17) for the rotation of the mandrel shaft (2) and a portion (18) for the locking of the mandrel shaft (2), said portions (17-18) being selectable by controlling the rigid body (9).

6. A device according to any of the preceding claims, **characterised in that** it comprises guide means (19-21) for the rigid body (9).
